(19) Europäisches Patentamt

European Patent Office

Office européen des brevets

(11) **EP 1 388 960 A1**

(12) **DEMANDE DE BREVET EUROPEEN**

(43) Date de publication:
**11.02.2004 Bulletin 2004/07**

(51) Int Cl.$^7$: **H04B 10/17**

(21) Numéro de dépôt: **03291960.7**

(22) Date de dépôt: **05.08.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **09.08.2002 FR 0210141**

(71) Demandeur: **ALCATEL**
**75008 Paris (FR)**

(72) Inventeurs:
- **Balland, Guy**
  **91700 Ste Geneviève des Bois (FR)**
- **Michaud, Alice**
  **75013 Paris (FR)**

- **Rossi, Emmanuel**
  **75014 Paris (FR)**
- **Bruyère, Frank**
  **75014 Paris (FR)**
- **Pochet, Jacques**
  **91220 Brétigny sur Orge (FR)**
- **Trouillet, Christophe**
  **92120 Montrouge (FR)**

(74) Mandataire: **Chaffraix, Sylvain et al**
**Compagnie Financière Alcatel**
**Département de Propriété Industrielle,**
**5, rue Noel Pons**
**92734 Nanterre Cedex (FR)**

(54) **Dispositif d'amplification optique à contrôle de gain automatique**

(57) Le contrôle automatique de gain comprend les étapes de :

- fourniture d'un dispositif d'amplification optique présentant :

  - un atténuateur optique variable ; et
  - un amplificateur optique connecté en aval de l'atténuateur optique ;

- mesure de la puissance à l'entrée du dispositif d'amplification ;
- détermination du nombre de canaux à l'entrée du dispositif d'amplification en fonction de la puissance mesurée connaissant la valeur de l'atténuation d'un span situé en amont du dispositif;
- modification du gain de l'amplificateur en fonction du nombre de canaux déterminés.

FIG_3

EP 1 388 960 A1

**Description**

L'invention concerne les dispositifs d'amplification optique, et plus particulièrement les dispositifs d'amplification optique à gain uniformisé destinés à être utilisés pour les systèmes de transmission par fibre optique à multiplexage de longueur d'onde. De tels dispositifs amplificateurs sont utilisés pour compenser à intervalles réguliers la perte sur la ligne. Ces dispositifs amplificateurs sont de préférence identiques sur toute la liaison, et présentent un gain aussi plat que possible sur toute la plage de longueur d'onde utilisée dans le système de transmission, pour une puissance d'entrée donnée.

Le gain d'un dispositif amplificateur diffère en fonction de la longueur d'onde du signal à amplifier. Sur un réseau présentant de multiples amplificateurs, ces différences de gain entre les différentes fréquences s'accumulent. Certains canaux de fréquence sont ainsi pénalisés. Afin de fournir une bonne qualité de service pour les canaux défavorisés, une première solution a consisté à rapprocher les amplificateurs successifs. On utilise alors une plus grande quantité d'amplificateurs et le coût du réseau est par conséquent élevé.

Des techniques d'uniformisation du gain sur le spectre de fréquence allant de 1530 à 1560 nanomètres sont connues. L'utilisation de filtres d'égalisation de gain, la modification du profil de dopage de la fibre ou l'utilisation de gaines de fibres en matériaux spécifiques permettent de ramener l'uniformité de gain à 1 dB près sur le spectre 1530-1560 nm. Ces différentes techniques ne permettent cependant d'atteindre une telle valeur de gain que pour une puissance d'entrée nominale. Lorsque la puissance d'entrée dévie de la valeur nominale, l'uniformité de gain chute rapidement. Entre autres facteurs de variation de la puissance d'entrée d'un dispositif d'amplification, on peut citer le vieillissement ou la réparation des fibres qui génèrent une atténuation inter-amplificateurs, le changement de topologie du réseau à l'amont du dispositif d'amplification, le changement du nombre de canaux d'entrée sur le dispositif d'amplification ou une rupture de fibre à l'amont d'un multiplexeur d'insertion/extraction optique.

Un dispositif d'amplification optique, décrit dans le document US-B-6 257 329, comprend un amplificateur optique, un atténuateur optique variable (VOA) placé à l'entrée de l'amplificateur optique, et un contrôleur (CONT) commandant l'atténuateur optique variable et l'amplificateur optique. Le contrôleur est connecté à un réseau d'information à grande vitesse (IN) utilisé pour que chaque noeud du réseau puisse mémoriser la topologie du réseau. Le réseau d'information à grande vitesse envoie au contrôleur des données concernant les paramètres de fonctionnement du réseau, tels que l'atténuation inter-amplificateurs appelée aussi « atténuation de span» ou tout simplement «span » dans ce qui suit ("span attenuation" en anglais). Le contrôleur surveille en particulier la puissance d'entrée (PIN) et la puissance de sortie (POUT) de l'amplificateur.

Une variation de l'atténuation inter-amplificateurs ou une modification de la topologie du réseau à l'amont de l'amplificateur optique (sans changement du nombre de canaux) est déclarée au contrôleur par le réseau d'information (IN). Le contrôleur dispose alors de l'amplitude de la variation de la puissance d'entrée. Le contrôleur impose des corrections à l'atténuateur optique variable visant à maintenir la puissance à l'entrée de l'amplificateur optique à sa valeur nominale. L'amplificateur optique fournit ainsi une puissance de sortie, un facteur de bruits et une uniformité de gain approximativement constants. Lors d'une modification de l'allocation ou du nombre des canaux à l'entrée de l'amplificateur optique, le réseau d'information à grande vitesse communique cette information au contrôleur. Le contrôleur agit alors sur l'amplificateur optique pour maintenir son gain constant.

Ce dispositif d'amplification optique et son procédé de fonctionnement présentent des inconvénients. Le processus de contrôle est lent. Il est dépendant des informations transmises au contrôleur par le réseau d'information à grande vitesse. Lors d'un changement soudain du nombre de canaux, résultant par exemple d'une coupure accidentelle de la fibre optique ou d'une défaillance du multiplexeur d'insertion/extraction optique (donc par nature imprévisibles), la correction de l'amplificateur optique par le contrôleur n'est possible qu'après la réception de l'information émise par le réseau d'information à grande vitesse. L'amplificateur optique fonctionne alors avec une puissance d'entrée éloignée de sa puissance nominale pendant une durée supérieure à plusieurs centaines de millisecondes. L'ensemble des amplificateurs optiques dont le nombre de canaux a été modifié cumule un défaut de gain pendant cette durée. Cela provoque une dégradation transitoire du service. Le contrôleur attend la confirmation de la part du réseau d'information à grande vitesse pour déterminer que la variation est due à un changement du nombre de canaux avant d'appliquer une correction sur l'atténuateur optique variable.

De plus, la diminution du nombre de canaux à l'entrée de l'atténuateur optique implique une diminution de la puissance à l'entrée du dispositif d'amplification. On a par exemple une baisse de puissance d'entrée de 15dB lors du passage de 32 à 1 canal à l'entrée d'un tel dispositif d'amplification optique. Le maintien de l'uniformité de gain de l'amplificateur optique lors d'une telle diminution de puissance détériore le facteur de bruit (appelé NF), le rapport signal sur bruit optique (appelé OSNR) de l'amplificateur optique, ainsi que l'uniformité de gain.

Par ailleurs, une fois que la correction est appliquée par l'atténuateur optique variable, l'atténuateur optique variable maintient une puissance constante à l'entrée de l'amplificateur optique. Le rapport signal/bruit à la sortie de l'amplificateur est alors dégradé. C'est notamment le cas lorsque l'atténuateur optique variable doit réduire la puissance avant l'entrée de l'amplificateur optique car le rapport signal/bruit S/B (exprimé en dB) suit une loi du type S/B= PIN - Nf + C (PIN étant la puissance en dBm à l'entrée de l'amplificateur, Nf étant le facteur de bruit externe, et C étant une constante). Cela implique ainsi de rapprocher des dispositifs amplificateurs successifs avec une augmentation de coût associée.

Il existe donc un besoin pour un procédé de fonctionnement d'un dispositif amplificateur résolvant un ou plusieurs de ces inconvénients.

L'objet de l'invention est un procédé de gestion d'un dispositif d'amplification optique pour système de transmission par fibre optique à multiplexage de longueur d'onde, ce premier dispositif d'amplification étant disposé pour recevoir un signal multiplex formé d'une pluralité de canaux et comprenant :

- un atténuateur optique variable ; et
- un premier amplificateur optique connecté en aval de l'atténuateur optique ;

ledit procédé étant **caractérisé** en ce qu'il comprend les étapes de :

- mesure de la puissance du signal reçu à l'entrée du premier dispositif d'amplification ;
- commande permanente du gain du premier amplificateur en fonction de ladite puissance mesurée, selon une courbe d'amplification adaptée pour tenir compte de variations de ladite puissance mesurée et qui seraient dues uniquement à des variations du nombre de canaux présents à l'entrée du premier dispositif d'amplification;
- détermination de l'atténuation optique AttSpan entre le premier dispositif d'amplification optique et un second dispositif d'amplification optique connecté en amont du premier dispositif d'amplification optique;
- et maintien de la relation AttSpan + AttVOA = K en commandant la valeur d'atténuation AttVOA de l'atténuateur, AttSpan étant l'atténuation entre lesdits dispositifs d'amplification ; AttVOA étant l'atténuation de l'atténuateur optique du premier dispositif optique ; K étant une constante prédéterminée.

Généralement, dans les réseaux et systèmes de transmission le nombre de canaux destinés à être amplifier par chaque dispositif d'amplification est une information connue. Le nombre de canaux présents à l'entrée du premier dispositif d'amplification peut donc être connu par le contrôleur à partir d'un réseau d'information. Dans ce cas, sachant que la puissance optique par canal est une donnée constante également déterminable, l'atténuation optique AttSpan sera aisément calculée en fonction de la valeur de la puissance du signal reçu par le premier dispositif et de ce nombre connu de canaux.

L'invention est maintenant décrite plus en détails dans la description qui suit, et en référence aux dessins, dans lesquels :

- la figure 1 est un schéma représentant la structure d'un dispositif d'amplification optique mettant en oeuvre l'invention ;
- la figure 2 est une courbe d'amplification d'un amplificateur du dispositif de la figure 1 ;
- la figure 3 est un schéma représentant la structure d'un autre dispositif d'amplification optique mettant en oeuvre l'invention ;
- la figure 4 est une courbe d'amplification d'un amplificateur d'entrée du dispositif de la figure 3 ;
- la figure 5 est une courbe d'amplification d'un amplificateur de sortie du dispositif de la figure 3.

L'invention propose d'effectuer une mesure de puissance à l'entrée d'un dispositif d'amplification optique muni d'un atténuateur variable et d'un amplificateur optique. Le nombre de canaux à l'entrée est déterminé en fonction de la puissance mesurée. La valeur du gain de l'amplificateur est modifiée en fonction de ce nombre de canaux. Ainsi, lors d'une brusque variation du nombre de canaux en amont du dispositif d'amplification optique, ce dispositif s'adapte rapidement à la variation de puissance d'entrée pour éviter des problèmes transitoires de transmission. Par la suite, on définira l'amont et l'aval par rapport à la direction de transmission sur le réseau optique.

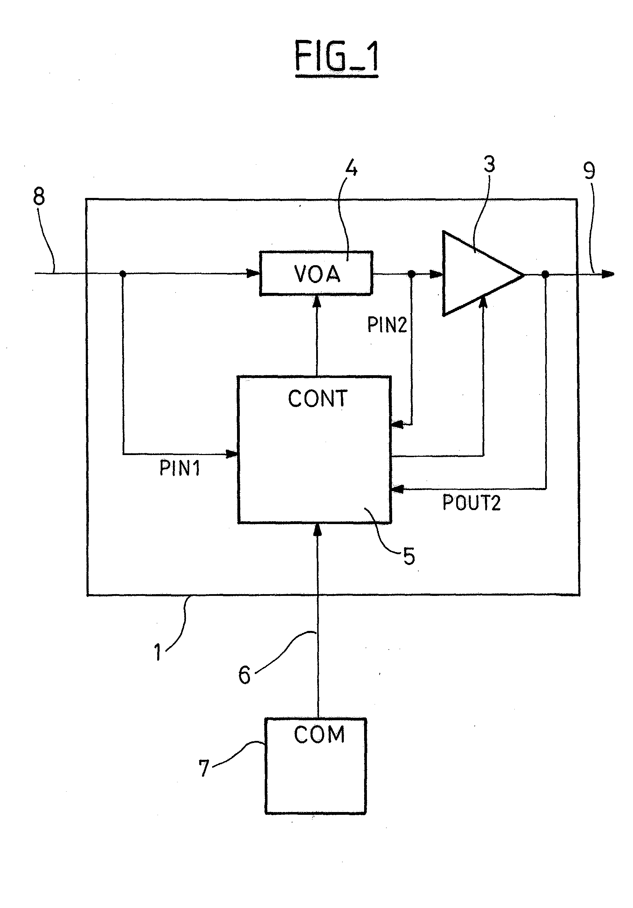

La **figure 1** représente la structure d'un premier mode de réalisation d'un dispositif d'amplification optique susceptible de mettre en oeuvre l'invention. Le dispositif comprend un atténuateur optique variable 4 dont l'entrée est connectée à une fibre optique 8 d'un réseau de communication. L'entrée d'un amplificateur optique 3 est connectée à l'aval de la sortie de l'atténuateur optique variable 4. La sortie de l'amplificateur optique 3 est connectée à une fibre optique 9 du réseau de communication.

Le dispositif d'amplification optique 1 comprend également un contrôleur 5, susceptible de contrôler l'atténuateur optique variable 4 et le gain de l'amplificateur optique 3. Le contrôleur 5 est ainsi connecté à l'atténuateur optique variable 4 et l'amplificateur optique 3. Le contrôleur 5 mesure également la puissance optique Pin1 à l'entrée de l'atténuateur optique variable 4, les puissances optiques Pin2 et Pout2 à l'entrée et à la sortie de l'amplificateur optique 3. Le contrôleur 5 est de préférence également connecté à une commande 7 par l'intermédiaire d'un réseau de communication 6.

La valeur de l'atténuation (en dB) de l'atténuateur optique variable 4, AttVOA, est ajustée par le contrôleur à partir de la valeur de AttSpan, reçue par le réseau 6 ou mesurée localement, afin de respecter la relation AttVOA+AttSpan=K.

Le contrôleur mesure en permanence la puissance à l'entrée du dispositif d'amplification optique 1, c'est-à-dire la puissance Pin1 dans l'exemple de la figure

1. Le nombre Nch de canaux reçus à l'entrée du dispositif d'amplification optique 1 est fonction de la puissance d'entrée Pin1 (en dBm) mesurée et de l'atténuation du span Attspan (en dB et supposé connue par ailleurs), selon une relation connue de type : $10*\ln (Nch)=Pin1+AttSpan+$ constante,

applicable pour les cas de spectres quasi uniforme en longueur d'onde. La valeur du gain de l'amplificateur optique 3 est alors modifiée par le contrôleur 5 en fonction de Pin1 qui constitue une mesure du nombre de canaux (avec l'hypothèse hautement probable que l'atténuation Attspan connue du contrôleur est toujours exacte).

Ainsi, le dispositif d'amplification optique peut adapter rapidement le gain de l'amplificateur optique 3 sans avoir à attendre de confirmation du changement du nombre de canaux par un lien de communication optique. On évite ainsi des problèmes de transmission transitoires lors du changement du nombre de canaux à l'entrée du dispositif d'amplification optique 1. Le cas le plus fréquent de modification du nombre de canaux à l'entrée provient de ruptures de fibres en amont d'un multiplexeur optique à insertion/extraction en amont du dispositif d'amplification optique 1. Le nombre de canaux peut alors subitement être réduit, ce qui provoque une baisse de la puissance d'entrée Pin1 sur le dispositif d'amplification optique 1. L'amplificateur 3 est alors réglé pour compenser la réduction de la puissance d'entrée Pin1 et maintenir la puissance par canal des canaux inchangée comparativement à la puissance par canal avant la rupture de la fibre. L'ensemble des amplificateurs en aval effectueront cette même opération d'ajustement de gain par un effet de chaîne. Outre sa rapidité de réaction, ce dispositif permet de se passer d'un réseau de communication rapide, ce qui permet de diminuer le coût et la complexité global du réseau de communication.

Si l'atténuation Attspan connue du contrôleur avait été inexacte, une nouvelle valeur de AttSpan serait alors en tout cas transmise ultérieurement par le réseau 6. L'atténuation de l'atténuateur optique variable 4, AttVOA, serait alors réajustée toujours pour respecter la relation AttVOA+AttSpan=K. Cela entraînerait une variation de la puissance d'entrée Pin1 et un réajustement immédiat du gain, ce qui rétablirait l'état de fonctionnement idéal (dans l'hypothèse hautement probable que des modifications du nombre de canaux n'interviennent pas simultanément).

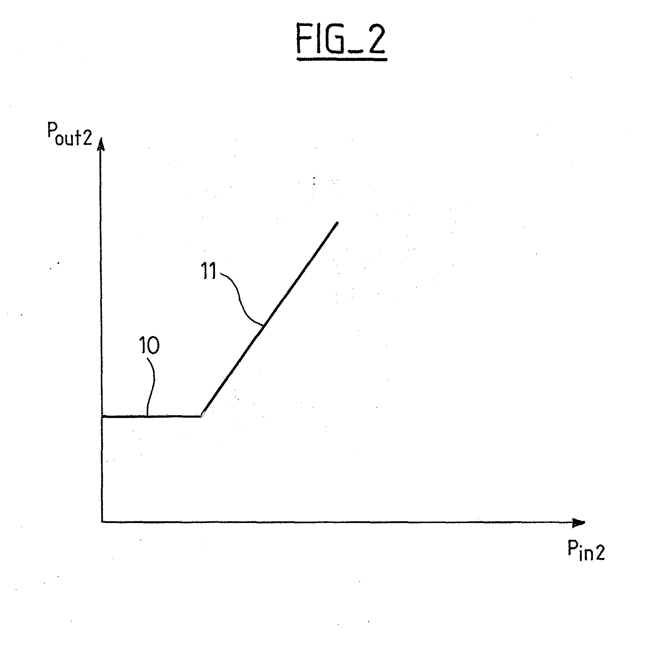

La **figure 2** représente une courbe d'amplification de l'amplificateur optique 3 montrant les variations de sa puissance de sortie Pout2 (en dBm) en fonction de la puissance d'entrée Pin2 (en dBm). Le gain G de l'amplificateur optique 3 est défini en valeur linéaire par la relation :

$$G = Pout2/Pin2.$$

Comme représenté à la figure 2, le gain présente de préférence un premier gain décroissant lorsque la puissance d'entrée croît sur une première plage de puissance d'entrée, et un deuxième gain sensiblement constant sur une deuxième plage de puissance d'entrée. Les puissances d'entrée sur la première plage sont inférieures aux puissances d'entrée sur la deuxième plage, et le gain sur la première plage est supérieur au gain sur la deuxième plage. Ainsi, sur la courbe, la première plage correspond à la partie 10 et la deuxième plage correspond à la partie 11.

Ainsi, lors d'une variation de la puissance d'entrée dans la deuxième plage, le gain reste sensiblement constant en l'absence de détermination d'un changement de l'atténuation du span. La puissance par canal à la sortie de l'amplificateur optique 3 reste alors sensiblement constante.

Lorsque la puissance d'entrée diminue et passe de la deuxième plage à la première plage, le gain augmente. La puissance de sortie est ainsi à une valeur suffisante pour maintenir un bon rapport signal sur bruit lorsque la puissance d'entrée baisse. Dans ce cas la puissance par canal n'est plus maintenue constante et augmente. Comme le montre la figure, on peut prévoir un gain sur la première plage tel que la puissance de sortie Pout2 de l'amplificateur soit sensiblement constante sur cette plage.

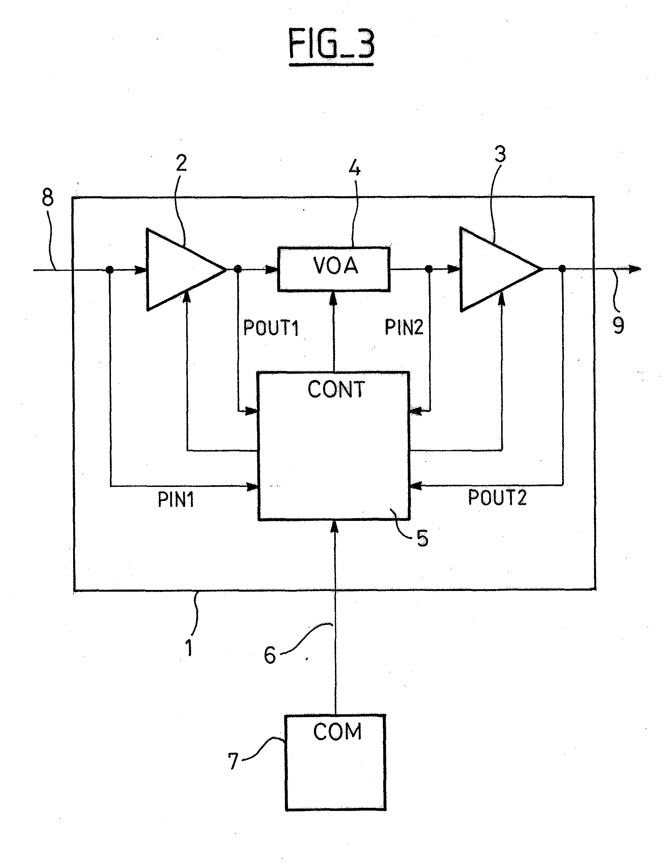

La **figure 3** représente la structure d'un deuxième mode de réalisation d'un dispositif d'amplification optique 1 susceptible de mettre en oeuvre l'invention. Le dispositif 1 comprend un amplificateur optique 2 dont l'entrée est connectée à une fibre optique 8. L'entrée d'un atténuateur optique variable 4 est connectée à l'aval de la sortie de l'amplificateur optique 2. L'entrée d'un amplificateur optique 3 est connectée à l'aval de la sortie de l'atténuateur optique variable 4. La sortie de l'amplificateur optique 3 est connectée à une fibre optique 9.

Le dispositif d'amplification optique 1 comprend un contrôleur 5 similaire au contrôleur de la figure 1. Le contrôleur est ainsi susceptible de contrôler l'atténuateur optique variable 4 et les amplificateurs optiques 2 et 3. Le contrôleur 5 est ainsi connecté à l'atténuateur optique variable 4 et aux amplificateurs optiques 3. Le contrôleur 5 mesure la puissance optique Pin1 à l'entrée de l'amplificateur optique 2, la puissance optique Pout1 à la sortie de l'amplificateur optique 2, la puissance Pin2 à l'entrée de l'amplificateur optique 3 et la puissance Pout2 à la sortie de l'amplificateur optique 3. Le contrôleur 5 est de préférence également connecté à une commande 7, de façon similaire à la figure 1.

Le placement de l'atténuateur optique variable 4 en aval de l'amplificateur optique 2 permet de réduire les pertes sur le signal à l'entrée du dispositif d'amplification optique 1. En effet, le signal appliqué à l'entrée du dispositif d'amplification optique 1 est amplifié par l'amplificateur optique 2 avant d'être appliqué sur l'atténuateur optique variable 4. La perte sur le signal intrinsèque à un atténuateur optique variable 4 n'est donc subie qu'après une étape préalable d'amplification. Le dispositif d'amplification optique 1 est donc susceptible d'amplifier des signaux présentant des puissances d'entrée inférieure, ce qui permet d'augmenter les distances entre les différents dispositifs d'amplification optique 1 du réseau de transmission. L'amplification de l'amplificateur optique 2 est de préférence telle que la puissance Pin1 est supérieure à la puissance Pin2 d'au moins 1 dB. Ainsi, le rapport signal sur bruit du dispositif d'amplification optique 1 est amélioré dans le même rapport.

L'utilisation de deux amplificateurs optiques 2 et 3 permet de maintenir l'uniformité spectrale du gain du dispositif d'amplification optique 1. En effet, lorsque le contrôleur détecte un variation de l'atténuation du span en amont du dispositif d'amplification 1 (variation de Pin1 sans variation du nombre de canaux), la valeur de l'atténuateur optique variable 4 est modifiée afin de maintenir :

$$AttVOA + Span = Constante$$

qui permet d'assurer l'uniformité spectrale du gain à la sortie de l'amplificateur optique 2, en d'autres termes, le défaut d'uniformité du gain de l'amplificateur 2 se trouve exactement compensée par le défaut d'uniformité du gain de l'amplificateur 3, donnant ainsi une uniformité optimum sur l'ensemble du dispositif d'amplification 1

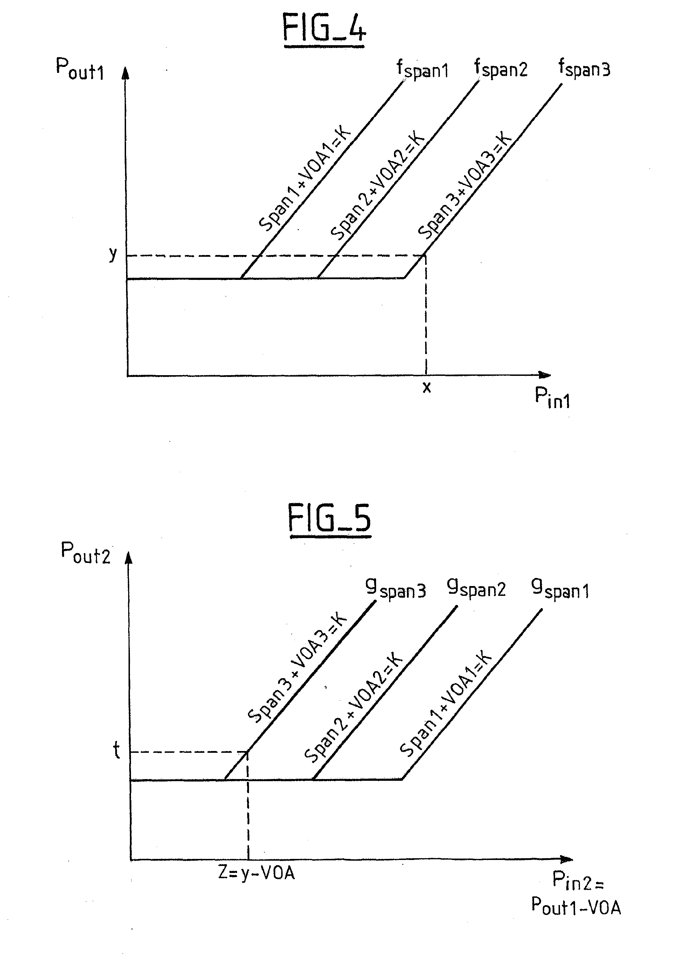

On va maintenant décrire en référence aux **figures 4 et 5** des courbes d'amplification avantageusement utilisées dans les amplificateurs optiques 2 et 3. Ces courbes montrent les variations des puissances de sortie Pout2 et Pout1 (en dBm) respectivement des amplificateurs optiques 2 et 3 en fonction des puissances Pin2 et Pin1 (en dBm) reçues respectivement sur leurs entrées. Le contrôleur peut modifier les de gains des amplificateurs optiques 2 et 3, en fonction du nombre de canaux à l'entrée du dispositif d'amplification optique 1. Les gains (linéaires) des amplificateurs 2 et 3 sont définis respectivement par :

$$F = Pout1 / Pin1 \text{ et } G = Pout2 / Pin2.$$

Les courbes d'amplification , $f_i$ et $g_i$, des figures 4 et 5 vérifient de préférence les règles suivantes :

1) Pour une puissance à l'entrée du dispositif d'amplification optique 1 donnée, $f_{span1}(Pin1)$ est supérieure ou égale à $f_{span2}(Pin1)$ sur un intervalle de Pin1 donnée, lorsque span1 >span2, span 1 et span2 étant deux atténuations de span, $f_{span1}$ et $f_{span2}$ étant des courbes d'amplification. La relation précédente est de préférence vérifiée sur l'ensemble de l'intervalle de puissance d'entrée Pin1 utile commun aux différentes courbes. Les courbes de la figure 4 sont identifiées par des références de $f_{span}$, l'indice correspondant au span précédant l'amplificateur 2.

2) Pour une puissance à l'entrée du dispositif d'amplification optique 1 donnée, $g_{span1}(Pin1)$ est inférieure ou égale à $g_{span2}(Pin1)$ sur un intervalle de Pin1 donné, lorsque span1≥span2, span 1 et span2 étant deux atténuations de span, $g_{span1}$ et $g_{span2}$ étant des courbes d'amplification. La relation précédente est de préférence vérifiée sur l'ensemble de l'intervalle de puissance d'entrée Pin1 utile commun aux différentes courbes. Les courbes de la figure 5 sont identifiées par des références $g_{span}$, l'indice correspondant au span précédant l'amplificateur 2. L'utilisation de telles courbes d'amplification permet ainsi de maintenir un gain uniforme sur les différents canaux, même lors d'un changement de nombre de canaux.

La courbe de gain de l'amplificateur optique 2 présente de préférence un gain décroissant lorsque la puissance Pin1 croît sur une première plage de puissance. La courbe de gain de l'amplificateur optique 2 présente également de préférence un gain sensiblement constant sur une deuxième plage de puissance Fin1,les puissances de la deuxième plage étant supérieures aux puissances de la première plage. Le gain sur la première plage est supérieur au gain sur la deuxième plage. Comme pour la courbe de gain de la figure 2, la première plage de puissance correspond à une puissance Pout1 sensiblement constante, tandis que la deuxième plage de puissance correspond à un gain sensiblement constant.

La courbe de gain de l'amplificateur optique 3 présente de préférence un gain décroissant lorsque la puissance Pin2 croît sur une première plage de puissance. La courbe de gain de l'amplificateur optique 3 présente également de préférence un gain sensiblement constant sur une deuxième plage de puissance Pin2, les puissances de la deuxième plage étant supérieures aux puissances de la première plage. Le gain sur la première plage est supérieur au gain sur la deuxième plage. Comme pour la courbe de gain de la figure 2, la première plage de puissance correspond à une puissance Pout2 sensiblement constante, tandis que la deuxième plage de puissance correspond à un gain sensiblement constant.

Avantageusement, on détermine l'atténuation inter-amplificateurs à l'amont du dispositif d'amplification optique 1, connaissant par ailleurs le nombre de canaux à l'entrée du dispositif d'amplification optique 1 à l'aide d'une relation de type :

$$10*ln(Nch) = Pin + AttSpan + constante,$$

applicable pour les cas de spectres quasi uniformes en longueur d'onde.

Cette détermination peut être effectuée soit par des éléments externes, tels que la commande 7, disposés en amont du dispositif d'amplification et qui fournissent au dispositif 1 la valeur de l'atténuation Attspan, soit par le dispositif d'amplification optique 1 lui-même en fonction du nombre de canaux fourni à partir du réseau d'information 6. Dans ce dernier cas, le dispositif d'amplification optique 1 peut déterminer l'atténuation inter-amplificateurs en mesurant Pin1, puis en utilisant soit une valeur de référence de la puissance de sortie du dispositif d'amplification amont, soit en récupérant cette valeur de puissance par l'intermédiaire du réseau 6. Cette solution est facile à mettre en oeuvre compte tenu du fait que le nombre de canaux appliqués est une information normalement toujours disponible dans un réseau ou un système de transmission.

L'atténuation inter-amplificateurs est ensuite utilisée pour vérifier la relation suivante :

$$AttSpan + AttVOA = K,$$

AttSpan étant l'atténuation (en dB) inter-amplificateurs, AttVOA étant l'atténuation (en dB) dans l'atténuateur optique variable et K étant une constante. Le contrôleur modifie éventuellement la valeur de AttVOA si une nouvelle valeur de AttSpan a été déterminée. On dispose ainsi d'une courbe de gain du dispositif d'amplification optique 1 uniforme sur les différents canaux. En effet, en l'absence de changement du nombre de canaux, la puissance à la sortie de l'atténuateur optique variable est sensiblement constante. Par conséquent, l'amplificateur optique 3 peut disposer au cours de son fonctionnement normal d'une puissance d'entrée nominale pour laquelle son gain est uniforme sur les différents canaux.

En l'absence de modification de l'atténuation inter-amplificateurs, la variation de Pin1 est détecté par 5 comme une variation du nombre de canaux et le gain de 2 est ajusté instantanément selon les courbes de la figure 4. A son tour, le gain de 3 est ajusté sur détection d'une variation de Pin2 selon la courbe de la figure 5. La puissance par canal est ainsi maintenue constante sur une plage haute de Pin1 et la puissance totale est maintenue constante sur une plage basse de Pin1

Dans le cas d'une modification de l'atténuation inter-amplificateurs (vieillissement ou réparation de la fibre de ligne), il est possible connaissant par exemple le nombre de canaux présent à l'entrée de 1 par COM (7), de procéder à un ajustement automatique de AttVOA selon la relation AttSpan + AttVOA = K, l'amplificateur se trouve alors à nouveau dans des conditions de gain uniforme et prêt à réagir à des variations de Pin1 (i.e. variation du nombre de canaux).

Il est à noter qu'une troisième possibilité existe qui consiste à mixer la solution de la figure 1 avec celle de la figure 3 (atténuateur optique variable à l'entrée de l'amplificateur à deux étages), dans ce cas l'atténuation inter-étages (AttIE) est fixe et ajustée à une valeur telle que AttSpan + AttVOA +AttIE= K

## Revendications

1. Procédé de gestion d'un premier dispositif d'amplification optique (1) pour système de transmission par fibre optique à multiplexage de longueur d'onde, ce premier dispositif d'amplification étant disposé pour recevoir un signal multiplex formé d'une pluralité de canaux et comprenant :

   - un atténuateur optique variable (4); et
   - un premier amplificateur optique (3) connecté en aval de l'atténuateur optique ;

   ledit procédé étant **caractérisé en ce qu'**il comprend les étapes de :

   - mesure de la puissance (Pin1) du signal reçu à l'entrée du premier dispositif d'amplification ;
   - commande permanente du gain du premier amplificateur (3) en fonction de ladite puissance mesurée, selon une courbe d'amplification adaptée pour tenir compte de variations de ladite puissance mesurée et qui seraient dues uniquement à des variations du nombre de canaux présents à l'entrée du premier dispositif d'amplification;
   - détermination de l'atténuation optique AttSpan entre le premier dispositif d'amplification optique (1) et un second dispositif d'amplification optique connecté en amont du premier dispositif d'amplification optique;
   - et maintien de la relation AttSpan + AttVOA = K en commandant la valeur d'atténuation AttVOA de l'atténuateur (4), AttSpan étant l'atténuation exprimée en dB entre lesdits dispositifs d'amplification ; AttVOA étant l'atténuation exprimée en dB de l'atténuateur optique du premier dispositif optique ; K étant une constante prédéterminée.

2. Procédé selon la revendication 1, **caractérisé en ce que** le nombre de canaux présents à l'entrée du premier dispositif d'amplification étant connu à partir d'un réseau d'information, l'atténuation optique AttSpan est calculée en fonction de la valeur de la puissance du signal reçu par le premier dispositif (1) et dudit nombre connu de canaux.

3. Procédé selon l'une des revendications 1 ou 2, **caractérisé en ce que** l'amplificateur a une courbe d'amplification présentant :

- un premier segment où le gain est décroissant lorsque la puissance d'entrée croît, pour une première plage de puissances à son entrée ;
- un deuxième segment où le gain est sensiblement constant pour une deuxième plage de puissances à son entrée, les puissances de la première plage étant inférieures aux puissances de la deuxième plage.

4. Procédé selon l'une des revendications 1 ou 2, **caractérisé en ce que** le premier dispositif d'amplification optique comprenant un second amplificateur optique (2) connecté en amont de l'atténuateur optique variable, la courbe d'amplification du premier amplificateur optique (3) présente :

- un premier segment où le gain est décroissant lorsque sa puissance d'entrée croît, pour une première plage de puissances à son entrée ;
- un deuxième segment où le gain est sensiblement constant, pour une deuxième plage de puissances à son entrée, les puissances de la deuxième plage de puissance étant supérieures aux puissances de la première plage ;

et **en ce que** le second amplificateur optique (2) est commandé pour avoir une courbe de gain qui présente :

- un premier segment où le gain est décroissant lorsque sa puissance d'entrée croît, pour une première plage de puissances à son entrée,
- un deuxième segment où le gain est sensiblement constant pour une deuxième plage de puissances à son entrée, les puissances de la deuxième plage de puissance étant supérieures aux puissances de la première plage.

5. Procédé selon la revendication 4, **caractérisé en ce que** la courbe d'amplification d'un amplificateur représentant les variations de sa puissance de sortie en fonction la puissance reçue sur son entrée :

- le premier amplificateur optique (3) présente des courbes d'amplification définies telles que, pour span1 $\geq$ span2,

$$g_{span1}(Pin2) \leq g_{span2}(Pin2)$$

au moins sur une plage de valeurs de Pin2 ; $g_{span1}$ et $g_{span2}$ étant des courbes d'amplification du premier amplificateur pour des atténuations de span respectivement span1 et span2, Pin2 étant une puissance à l'entrée du premier amplificateur ;
- le second amplificateur optique (2) présente des courbes d'amplification définies telles que

pour span1 $\geq$ span2,

$$f_{span1}(Pin1) \geq f_{span2}(Pin1)$$

au moins sur une plage de valeurs de Pin1 ;

$f_{span1}$ et $f_{span2}$ étant des courbes d'amplification du second amplificateur pour des atténuations de span respectivement span1 et span2, Pin1 étant une puissance à l'entrée du second amplificateur.

# FIG_1

## FIG_2

$P_{out2}$

11

10

$P_{in2}$

# FIG_3

## FIG_4

## FIG_5

# EP 1 388 960 A1

**Office européen des brevets**

## RAPPORT DE RECHERCHE EUROPEENNE

Numéro de la demande

EP 03 29 1960

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | US 6 400 479 B1 (PATEL NAIMISH ET AL) 4 juin 2002 (2002-06-04) * colonne 2, ligne 28 - ligne 31 * * colonne 3, ligne 14 - ligne 23 * * colonne 5, ligne 20 - ligne 26 * | 1 | H04B10/17 |
| A | * colonne 7, ligne 8 - ligne 12 * --- | 2-5 | |
| Y | EP 0 975 103 A (FUJITSU LTD) 26 janvier 2000 (2000-01-26) | 1 | |
| A | * colonne 8, ligne 34 - ligne 39 * --- | 2-5 | |
| A | EP 1 033 834 A (FUJITSU LTD) 6 septembre 2000 (2000-09-06) * page 7, ligne 3 - ligne 22 * * page 8, ligne 16 - ligne 26 * ----- | 1-5 | |

**DOMAINES TECHNIQUES RECHERCHES (Int.Cl.7)**

H04B

Le présent rapport a été établi pour toutes les revendications

| Lieu de la recherche | Date d'achèvement de la recherche | Examinateur |
|---|---|---|
| MUNICH | 20 octobre 2003 | Ribbe, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 03 29 1960

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-10-2003

| Document brevet cité au rapport de recherche | | Date de publication | Membre(s) de la famille de brevet(s) | | Date de publication |
|---|---|---|---|---|---|
| US 6400479 | B1 | 04-06-2002 | AU | 3635601 A | 03-07-2001 |
| | | | WO | 0147151 A1 | 28-06-2001 |
| EP 0975103 | A | 26-01-2000 | EP | 0975103 A1 | 26-01-2000 |
| | | | US | 2003002139 A1 | 02-01-2003 |
| | | | US | 2003147123 A1 | 07-08-2003 |
| | | | US | 6542291 B1 | 01-04-2003 |
| | | | CN | 1255259 T | 31-05-2000 |
| | | | WO | 9940695 A1 | 12-08-1999 |
| EP 1033834 | A | 06-09-2000 | JP | 2000252923 A | 14-09-2000 |
| | | | EP | 1033834 A2 | 06-09-2000 |
| | | | US | 6359726 B1 | 19-03-2002 |
| | | | US | 2002041432 A1 | 11-04-2002 |

EPO FORM P0460

Pour tout renseignement concernant cette annexe : voir Journal Officiel de l'Office européen des brevets, No.12/82